**Europäisches Patentamt**

**European Patent Office**

**Office européen des brevets**

(19)

(11) Veröffentlichungsnummer : **0 342 190 B1**

(12)

# EUROPÄISCHE PATENTSCHRIFT

(45) Veröffentlichungstag der Patentschrift :
**01.04.92 Patentblatt 92/14**

(51) Int. Cl.$^5$ : **B23Q 9/00, B23Q 3/00**

(21) Anmeldenummer : **87907581.0**

(22) Anmeldetag : **23.11.87**

(86) Internationale Anmeldenummer :
**PCT/DE87/00544**

(87) Internationale Veröffentlichungsnummer :
**WO 88/04215 16.06.88 Gazette 88/13**

(54) **WINKELANSCHLAG.**

(30) Priorität : **10.12.86 DE 3642152**

(43) Veröffentlichungstag der Anmeldung :
**23.11.89 Patentblatt 89/47**

(45) Bekanntmachung des Hinweises auf die
Patenterteilung :
**01.04.92 Patentblatt 92/14**

(84) Benannte Vertragsstaaten :
**DE FR GB IT NL**

(56) Entgegenhaltungen :
**DE-C- 128 564**
**DE-C- 807 718**
**GB-A- 10 680**
**US-A- 4 607 434**

(73) Patentinhaber : **ROBERT BOSCH GMBH**
**Postfach 30 02 20**
**W-7000 Stuttgart 30 (DE)**

(72) Erfinder : **BRAUNBACH, Karl Heinz**
**Buchholzgarten 32**
**W-6661 Hornbach (DE)**

EP 0 342 190 B1

## Beschreibung

Die Erfindung geht aus von einem Winkelanschlag nach dem Oberbegriff unabhängigen Ansprüche. Verstellbare Winkelanschläge vor allem für Werkzeugmaschinen zur Holzbearbeitung sind bereits bekannt. Bei einem bekannten Winkelanschlag mit zwei geraden seitlichen Führungsschlitzen werden diese von feststehenden Stiften durchgriffen. Der Anlagetisch bewegt sich beim Verstellen des Winkels auf einer gekrümmten Bahn, so daß zwar bei 0°-Stellung ein Minimalspalt eingehalten wird in der Extremstellung (45°) aber ein relativ großer Spalt zwischen Schleifband und bandseitiger Tischkante entsteht. Bei derart großem Spalt wird einerseits - ganz besonders bei kleinen Werkstücken - die Führungsfunktion beeinträchtigt, andererseits besteht Unfallgefahr, wenn Werkstücke in den Spalt hineingezogen werden.

Vorteile der Erfindung

Die erfindungsgemäßen Winkelanschläge mit den Merkmalen der unabhängigen Ansprüche haben demgegenüber den Vorteil, daß der Spalt über den gesamten Verstellbereich des Anlagetisches konstant klein gehalten wird. Darüber hinaus haben sie den Vorteil, daß kein Befestigungs- oder sonstiges Teil des Winkelanschlags über die Tischebene des Anlagetisches oder die Bearbeitungsebene der Werkzeugmaschine hinausragt. Die Konstruktion ermöglicht auch eine Ausdehnung des Verstellbereichs über 45° hinaus.

Durch die in den abhängigen Ansprüchen aufgeführten Maßnahmen sind vorteilhafte Weiterbildungen und Verbesserungen der in den unabhängigen Ansprüchen angegebenen Winkelanschläge möglich.

Zeichnung

Zwei Ausführungsbeispiele des Winkelanschlags sind in der Zeichnung dargestellt und in der nachfolgenden Beschreibung näher erläutert. Figur 1 zeigt eine Seitenansicht des an einen Hobel angebauten Winkelanschlag 2, in Figur 2 ist eine Draufsicht auf den Winkelanschlag bei 0°-Stellung des Anlagetischs gezeigt, Figur 3 zeigt die Unterseite des Tischträgers und Figur 4 eine Seitenansicht eines Anlagetisches gemäß einem zweiten Ausführungsbeispiel.

Beschreibung der Ausführungsbeispiele

Der Winkelanschlag besteht aus einem schwenkbaren Anlagetisch 1 und einem Tischträger 2, der seinerseits entweder direkt oder über geeignete Halter 3 an der Werkzeugmaschine, z.B. einem Hobel 4 befestigt ist. Der Anlagetisch 1 weist eine ebene Anlagefläche 5 auf, die werkzeugmaschinenseitig durch die Kante 6 begrenzt wird. An beiden Schmalseiten der Anlagefläche 5 sind in Richtung Tischträger zwei um 90° abgewinkelte Seitenteile 7, 8 mit etwa dreieckiger Fläche angeordnet, wobei der Winkel zwischen der Anlagefläche 5 und der an die Kante 6 angrenzenden Seitenkante 9 nicht größer als der maximale Verstellwinkel des Anschlags ist.

Die Seitenteile 7, 8 weisen je zwei Führungsbahnen oder -schlitze auf, von denen jeweils eine (10) vorzugsweise geradlinig ist und in den Bereich zwischen Anlagefläche 5 und Seitenkante 9, beispielsweise unter einem Winkel von 22° zur Anlagefläche 5 angeordnet ist. Die anderen Führungsbahnen oder -schlitze 11 erstrecken sich etwa entlang der dritten Seitenkanten 12 der Anlageteile 7 und 8. Die Führungsschlitze 11 werden durch je einen geradlinigen Abschnitt 13, der sich etwa parallel zu der Seitenkante 12 erstreckt, und einen zu dieser Seitenkante hin leicht gebogenen Abschnitt 14 gebildet.

Zur Einstellung des Anlagewinkels gegenüber der Bearbeitungsebene 15 der Werkzeugmaschine ist an der Seitenkante 12 eine Winkelskala 16 angeordnet. Die eingestellte Winkelgradzahl ist an einer Markierung 17 an dem Seitenteil 18 des Tischträgers 2 ablesbar. Winkelskala und Markierung können auch an dem anderen Seitenteil 19 des Tischträgers 2 angebracht sein.

Die Seitenteile 18, 19 haben eine einem Rechteck mit abgeschrägter Ecke entsprechende Fläche. Die Abschrägung 20 verläuft unter einem Winkel von etwa 45° zu den benachbarten Seitenkanten 21 und 22. Nahe der Seitenkante 22 ist ein Stift 23 oder ähnliches angeordnet, der mit dem Führungsschlitz 10 korrespondiert. Ein zweiter Stift 24 befindet sich in der Nähe der Seitenkante 21. Im gezeigten Ausführungsbeispiel durchgeift der Stift 24 als Schraube mit Rändelkopf 36 den Führungsschlitz 11 und ist in eine Gewindebohrung 25 im Seitenteil 18 einschraubbar.

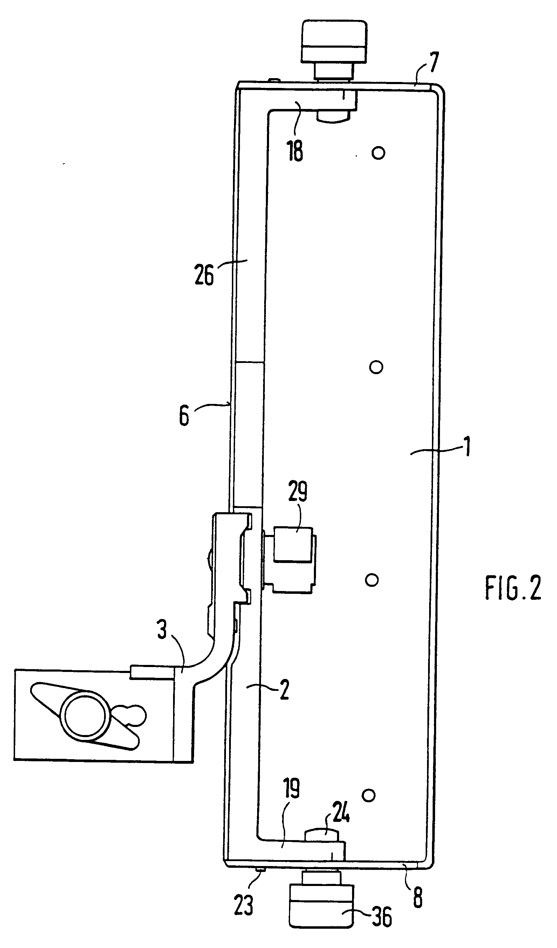

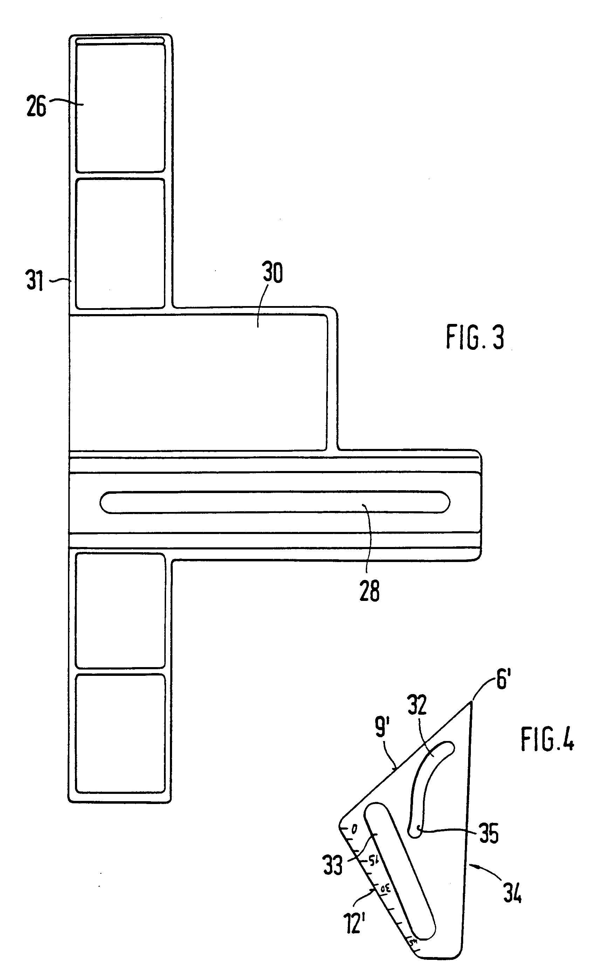

Die Seitenteile 18, 19 befinden sich an den Schmalzeiten einer Grundplatte 26 des Tischträgers 2 (Figur 2). Im mittleren Bereich weist dieser eine senkrecht zum Anlagetisch 1 angeordnete Schiene 27 mit einem Langloch 28 (Figur 3) auf, durch das eine Befestigungsschraube 29 des Halters 3 durchsteckbar ist, so daß der gesamte Winkelanschlag gegenüber dem Halter 3 bzw. gegenüber der Werkzeugmaschine quer verschieblich ist.

Für die Verwendung bei Hobeln weist die Grundplatte 26 eine Abdeckplatte 30 für die Hobelwelle auf. Die dem Anlagetisch 1 zugewandte Rippe 31 der Grundplatte 26 ist zu diesem Zweck im Bereich der Abdeckplatte 30 unterbrochen. Auch der Anlagetisch 1 ist im Bereich der Hobelwelle zweckmäßigerweise an seiner Kante 6 bogenförmig ausgeschnitten.

Der Tischträger 2 ist vorteilhafterweise ein Aluminiumgußteil, während der Anlagetisch ein Blechbiegeteil ist. Selbstverständlich können auch andere Fertigungsverfahren angewandt und/oder andere Werkstoffe benutzt werden.

Nach einem zweiten in Figur 4 gezeigten Ausführungsbeispiel ist die erste Führungsbahn 32 gebogen und die zweite Führungsbahn 33 im wesentlichen geradlinig. Sie erstreckt sich etwa entlang der Seitenkante 12'. Die Führungsbahn 32 beginnt in der Nähe der Kante 6' und erstreckt sich bogenförmig gegen die Seitenkante 9' ausgebaucht in Richtung auf den Mittelbereich des Seitenteils 34. Um den Verstellbereich über 45° hinaus zu verlängern, schließt sich an den ersten Bogen noch ein kurzer zur Seitenkante 12' hin leicht abgeknickter, im wesentlichen gerader Abschnitt 35 an.

Die Kante 6' des Anlagetischs 1 ist in der Weise abgeschrägt, daß sie über die Seitenkante 9' nicht hervorsteht, was ein noch näheres Heranrücken des Anlagetisches 1 an die Bearbeitungsebene der Werkzeugmaschine und eine bessere Anlage des Werkstücks insbesondere bei der 45°-Stellung des Winkelanschlags ermöglicht.

Die Gestaltung der Führungsbahnen beschränkt sich nicht auf die Ausführungsbeispiele in der Zeichnung. So kann auch mit zwei gekrümmten Führungsbahnen der gewünschte Bewegungsablauf des Anlagetisches erzeugt werden. Den Kurvenverlauf der zweiten Bahn erhält man dann, indem man bei gegebener erster Führungsbahn durch Wahl der Position des zweiten feststehenden Stifts einen Anfangspunkt für die zweite Bahn festlegt und dann den Anlagetisch bei Eingriff des ersten Stiftes in die erste Bahn so verschwenkt, daß sich die der Bearbeitungsebene der Werkzeugmaschine zugewandte Kante des Anlagetisches in konstantem Abstand zu der Bearbeitungsebene an dieser entlang bis zur zweiten Extremstellung des Anlagetisches bewegt.

Konkret können die beiden gekrümmten Führungsbahnen so ausgebildet sein wie die Führungsbahnen 11 und 32, allerdings mit jeweils schwächerer Krümmung, um die oben beschriebene Wirkung zu erzielen.

Statt als Schlitze können die Führungsbahnen auch in Form von Mulden oder Erhebungen ausgestaltet sein, mit entsprechend ausgebildeten, am Tischträger feststehenden Eingriffselementen. Auch mit am Anlagetisch feststehenden Zapfen und Führungsbahnen in den Seitenteilen des Tischträgers 2 ist die Lösung der Aufgabe möglich.

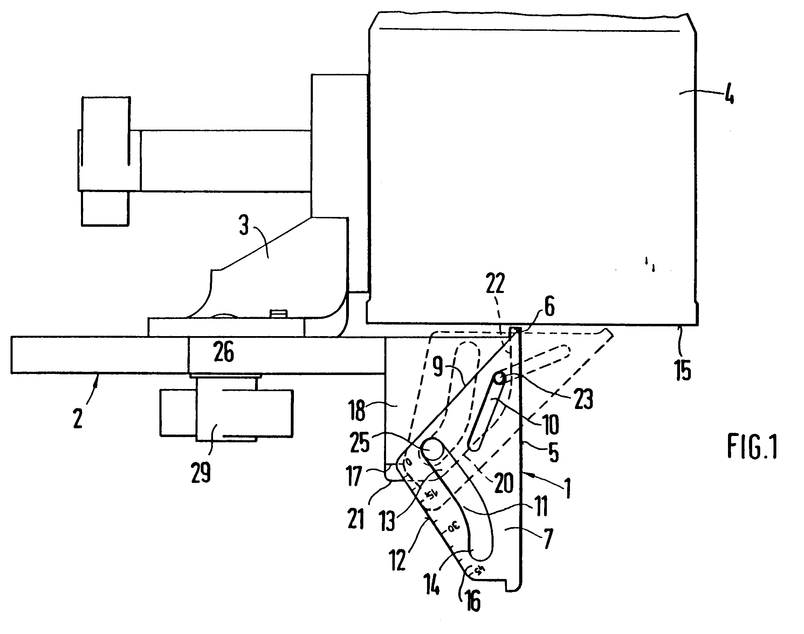

Die Funktion des Winkelanschlags ist aus Figur 1 klar ersichtlich. Dort ist die Nullstellung des Anlagetisches 1 gezeigt, bei dem Werkstückflächen rechtwinklig zu einer am Anlagetisch 1 anliegenden Fläche bearbeitet werden können. Die andere Extremstellung bei 45°-Stellung des Anlagetisches ist gestrichelt eingezeichnet. Zwischen den Extremstellungen ist jede beliebige Neigung des Anlagetisches an der Winkelskala 16 einstellbar.

## Patentansprüche

1. Winkelanschlag für Werkzeugmaschinen, bestehend aus einem Anlagetisch (1) und einem mit dem Gehäuse der Werkzeugmaschine fest verbindbaren Tischträger (2), wobei der Anlagetisch in seiner Neigung zur Bearbeitungsebene der Werkzeugmaschine einstellbar ist und hierfür zwei abgewinkelte Seitenteile (7,8) hat, die zum Leiten der Schwenkbewegung jeweils mit Führungsbahnen versehen sind, die mit Führungselementen am Tischträger in Wirkverbindung stehen, oder umgekehrt, und die gegen den Tischträger festklemmbar sind, dadurch gekennzeichnet, daß jeweils eine (10) der Führungsbahnen sich im wesentlichen geradlinig in einem spitzen Winkel gegenüber der Anlagefläche (5) des Anlagetisches (11) erstreckt und die andere (11) aus einem zumindest nahezu geradlinigen Abschnitt (13) und einem zweiten Abschnitt (14) besteht, der so gebogen ist, daß die der Bearbeitungsebene (15) der Werkzeugmaschine zugewandte Kante (6) des Anlagetichs (1) sich während dessen Winkelverstellung auf einer Bahn bewegt, die einer Geraden parallel zur Bearbeitungsebene (15) weitestgehend angenähert ist.

2. Winkelanschlag für Werkzeugmaschinen, bestehend aus einem Anlagetisch (1) und einem mit dem Gehäuse der Werkzeugmaschine fest verbindbaren tischträger (2), wobei der Anlagetisch in seiner Neigung zur Bearbeitungsebene der Werkzeugmaschine einstellbar ist und hierfür zwei abgewinkelte Seitenteile (7,8) hat, die zum Leiten der Schwenkbewegung jeweils mit Führungsbahnen versehen sind, die mit Führungselementen am Tischträger in Wirkverbindung stehen, oder umgekehrt, und die gegen den Tischträger festklemmbar sind, dadurch gekennzeichnet, daß jeweils eine (32) der Führungsbahnen in der Nähe der der Bearbeitungsfläche zugewandten Kante (6′) beginnend in einem der der Anlagefläche (5) gegenüberliegenden und an die erwähnte Kante (6′) angrenzenden Seitenkante (9′) zugewandten Bogen etwa in Richtung auf den Mittelbereich der Seitenteile (7, 8) verläuft und die andere Führungsbahn (33) sich etwa geradlinig entlang der der Kante (6′) abgewandten Seitenkante (12′) erstreckt, so daß die der Bearbeitungsebene (15) der Werkzeugmaschine zugewandte Kante (6) des Anlagetischs (1) sich während dessen Winkelverstellung auf einer Bahn bewegt, die einer Geraden parallel zur Bearbeitungsebene (15) weitestgehend angenähert ist.

3. Winkelanschlag für Werkzeugmaschinen, bestehend aus einem Anlagetisch (1) und einem mit dem Gehäuse der Werkzeugmaschine fest verbindbaren Tischträger (2), wobei der Anlagetisch in seiner Neigung zur Bearbeitungsebene der Werkzeugmaschine einstellbar ist und hierfür zwei abgewinkelte Seitenteile (7,8) hat, die zum Leiten der Schwenkbewegung jeweils mit Führungsbahnen versehen sind, die mit Führungselementen am Tischträger in Wirkverbindung stehen, oder umgekehrt, und die gegen den Tischträger festklemmbar sind, dadurch gekennzeichnet, daß jeweils eine der Führungsbahnen in der Nähe der der Bearbeitungsfläche zugewandten Kante (6) beginnend in einem der der Anlagefläche (5) gegenüberliegenden und an die erwähnte Kante (6) angrenzenden Seitenkante (9) zugewandten Bogen etwa in Richtung auf den Mittelbereich der Seitenteile (7, 8) verläuft und die andere aus einem zumindest nahezu geradlinigen Abschnitt und einem zweiten Abschnitt besteht, der so gebogen ist, daß die der Bearbeitungsebene (15) der Werkzeugmaschine zugewandte Kante (6) des Anlagetischs (1) sich während dessen Winkelverstellung auf einer Bahn bewegt, die einer Geraden parallel zur Bearbeitungsebene (15) weitestgehend angenähert ist.

4. Winkelanschlag nach Anspruch 1, 2 oder 3, dadurch gekennzeichnet, daß die Führungsbahnen (10, 11, 32, 33) als Durchbrechungen der Seitenteile (8, 9, 34) ausgebildet sind, in die am Tischträger (2) angeordnete, als Zapfen (23, 24) ausgebildete Führungselemente eingreifen, wobei je ein Zapfen (24) jeder Seite als Klemmelement dient, das den Anlagetisch (1) gegenüber dem Tischträger (2) festlegt.

5. Winkelanschlag nach einem der vorhergehenden Ansprüche, dadurch gekennzeichnet, daß die der Arbeitsfläche der Werkzeugmaschine zugewandte kante (6′) des Anschlagtischs (1) abgeschrägt ist.

6. Winkelanschlag nach einem der vorhergehenden Ansprüche, dadurch gekennzeichnet, daß der Tischträger (2) in seiner Grundplatte (26) eine Abdeckplatte (30) zum Abdecken der Hobelwelle aufweist.

## Claims

1. Angle stop for machine tools, consisting of a locating table (1) and a table support (2) which can be firmly connected to the housing of the machine tool, in which arrangement the locating table can be set in its inclination relative to the machining plane of the machine tool and has for this purpose two angled side parts (7, 8) which for directing the pivoting movement are each provided with guideways, which are in operative connection with guide elements on the table support, or vice versa, and which can be clamped in place against the table support, characterised in that in each case one (10) of the guideways extends essentially rectilinearly at an acute angle relative to the locating surface (5) of the locating table (1) and the other guideway (11) consists of an at least virtually rectilinear section (13) and a second section (14) which is curved in such a way that the edge (6) of the locating table (1) facing the machining plane (15) of the machine tool moves during its angular adjustment on a path which is brought as close as possible to a straight line parallel to the machining plane (15).

2. Angle stop for machine tools, consisting of a locating table (1) and a table support (2) which can be firmly connected to the housing of the machine tool, in which arrangement the locating table can be set in its inclination relative to the machining plane of the machine tool and has for this purpose two angled side parts (7, 8) which for directing the pivoting movement are each provided with guideways, which are in operative connection with guide elements on the table support, or vice versa, and which can be clamped in place against the table support, characterised in that in each case one (32) of the guideways, starting in the vicinity of the edge (6′) facing the machining surface, runs in a curve facing the side edge (9′) opposite the locating surface (5) and adjacent to the edge (6′) referred to, roughly in the direction of the centre area of the side parts (7, 8), and the other guideway (33) extends roughly rectilinearly along the side edge (12′) remote from the edge (6′), so that the edge (6) of the locating table (1) facing the machining plane (15) of the machine tool moves during its angular adjustment on a path which is brought as close as possible to a straight line parallel to the machining plane (15).

3. Angle stop for machine tools, consisting of a locating table (1) and a table support (2) which can be firmly connected to the housing of the machine tool, in which arrangement the locating table can be set in its inclination relative to the machining plane of the machine tool and has for this purpose two angled side parts (7, 8) which for directing the pivoting movement are each provided with guideways, which are in operative connection with guide elements on the table support, or vice versa, and which can be clamped in place against the table support, characterised in that in each case one of the guideways, starting in the vicinity of the edge (6) facing the machining surface, runs in a curve facing the side edge (9) opposite the locating surface (5) and adjacent to the edge (6) referred to, roughly in the direction of the centre area of the side parts (7, 8), and the other guideway consists of an at least virtually rectilinear section and a second section which is curved in such a way that the edge (6) of the locating table (1) facing the machining plane (15) of the machine tool moves during its angular adjustment on a path which is brought as close as possible to a straight line parallel to the machining plane (15).

4. Angle stop according to Claim 1, 2 or 3, characterised in that the guideways (10, 11, 32, 33) are designed as apertures in the side parts (8, 9, 34), in which apertures guide elements arranged on the table support (2) and designed as pins (23, 24) engage, in the course of which one pin (24) each on each side serves as a clamping element which secures the locating table (1) relative to the table support (2).

5. Angle stop according to one of the preceding claims, characterised in that the edge (6′) of the stop table (1) facing the working surface of the machine table is bevelled.

6. Angle stop according to one of the preceding claims, characterised in that the table support (2) has in its base plate (26) a cover plate (30) for covering the planer shaft.

## Revendications

1. Butée angulaire pour machine-outil, consistant en une table d'appui (1) et un support de table (2) pouvant être relié de façon fixe au carter de la machine-outil, dans laquelle la table d'appui peut être réglée en inclinaison par rapport au plan de travail de la machine-outil, et pour cela a deux ailes (7, 8) pliées en U, qui sont pourvues pour diriger le mouvement de basculement de voies de guidage, qui sont en liaison opérationnelle avec des éléments de guidage sur le support de table, ou inversement, et qui peuvent être bloqués contre le support de table, butée annulaire caractérisée en ce que l'une (10) des voies de guidage s'étend essentiellement de façon rectiligne en formant une angle aigu par rapport à la surface d'appui (5) de la table d'appui (11) et l'autre (11) consiste en une découpe (13) au moins presque rectiligne et une deuxième découpe (14), qui est recourbée de telle façon que le bord (6) de la table d'appui (1) qui est tourné vers le plan de travail (15) de la machine-outil se meut pendant son déplacement angulaire sur une voie, qui est très largement voisine d'une ligne droite parallèlement au plan de travail (15).

2. Butée angulaire pour machine-outil, consistant en une table d'appui (1) et un support de table (2) pouvant être relié de façon fixe au carter de la machine-outil, dans laquelle la table d'appui peut être réglée en inclinaison par rapport au plan de travail de la machine-outil, et à cet effet, on a deux ailes (7, 8) pliées en U, qui sont prévues pour diriger le mouvement de basculement de voies de guidage, et sont en liaison opérationnelle avec des éléments de guidage sur le support de table, ou inversement, et qui peuvent être bloqués contre le support de table, butée angulaire caractérisée en ce que l'une (32) des voies de guidage au voisinage du bord (6′), tourné vers la surface de travail, commençant par une courbe située en regard de la surface d'appui (5) et tournée vers le bord latéral (9′) limitant le bord mentionné (6′), s'étend à peu près en direction de la zone médiane des ailes (7, 8) et l'autre voie de guidage (33) s'étend de façon à peu près rectiligne le long du bord latéral (12′) tourné à l'opposé du bord (6′), si bien que le bord (6), tourné vers le plan de travail (15) de la machine-outil, de la table d'appui (1) se déplace pendant son réglage angulaire, sur une voie qui est très largement voisine d'une ligne droite parallèlement au plan de travail (15).

3. Butée angulaire pour machine-outil, consistant en une table d'appui (1) et un support de table (2) pouvant être reliée de façon fixe au carter de la machine-outil, dans laquelle la table d'appui peut être réglée en inclinaison par rapport au plan de travail de la machine-outil, et à cet effet, on a deux ailes (7, 8) pliées en U, qui sont prévues pour diriger le mouvement de basculement de voies de guidage, et sont en liaison opérationnelle avec des éléments de guidage sur le support de table, ou inversement, et qui peuvent être bloquées contre le support de table, butée angulaire caractérisée en ce que l'une des voies de guidage à proximité du bord (6) tourné vers la surface de travail, commençant par une courbe située vis-à-vis de la surface d'appui (5) et tournée vers le bord latéral (9) délimitant le bord mentionné s'étend à peu près dans la direction de la zone médiane des ailes (7, 8) et l'autre consiste en une découpe au moins à peu près rectiligne et une deuxième découpe, qui est recourbée de telle façon que le bord (6) de la table d'appui (1) tournée vers le plan de travail (15) de la machine-outil se déplace pendant son réglage angulaire sur une voie qui est très largement voisine d'une ligne droite parallèlement au plan de travail (15).

4. Butée angulaire selon la revendication 1, 2 ou 3, caractérisée en ce que les voies de guidage (10, 11, 32, 33) sont constituées comme des perçages à travers les ailes (8, 9, 34) dans lesquelles viennent en prise des éléments de guidage disposés sur le support de table (2), conformés comme des tenons (23, 24), un tenon (24) servant de chaque côté de l'élément de coincement, qui bloque la table d'appui (1) contre le support de table (2).

5. Butée angulaire selon l'une des revendications précédentes, caractérisée en ce que le bord (6′) de la table d'appui (1), tourné vers la surface de travail de la machine-outil, est biseauté.

6. Butée angulaire selon l'une des revendications précédentes, caractérisée en ce que le support de table (2) présente dans sa plaque de base (26) une plaque de recouvrement (30) pour recouvrir la lame de rabot.

FIG.1

FIG.2

26

31

30

FIG. 3

28

6'

9'   32

FIG.4

33   0   15

12'   30   35

34